# EUROPEAN PATENT APPLICATION

(11) **EP 0 999 379 A2**
(43) Date of publication of application: **10.05.2000**
(21) Application number: 99308808.7
(22) Date of filing: 04.11.1999
(51) Int. Cl.: F16F 15/00

(54) **Active vibration control**

(30) Priority: 04.11.1998 GB 9824151
(71) Applicant: Marconi Electronic Systems Limited, Stanmore, Middlesex HA7 4LY (GB)
(72) Inventor: Millar, Caroline Elizabeth, Nether Hayford, Northampton NN7 3NH (GB); Salloway, Anthony John, Western Favell, Northampton NN3 3EP (GB); Owen, Christopher Edward, Barrow-in-Furness, Cumbria LA14 3RV (GB)
(74) Representative: Hoste, Colin Francis

(57) **Abstract**

An apparatus for actively damping vibrations in an element (30) which is secured to a support (28) comprises: an actuator (10, 40) locatable at a point adjacent to the point of attachment (29) of the element to the support and operable to apply force between the element and the support. A sensor (34) is associated with the element to produce a signal in response to vibration of the element and control means (36) is provided to operate the actuator in response to said signal to apply a force to the element to damp vibrations therein.

## Description

This invention relates to active vibration control and more especially to an apparatus for and a method of controlling vibration of an element which is secured to a support.

There are many circumstances in which it is required to mount a system, sub-system, module, apparatus or other element to a support which is subject to vibration. Such a support may for example be a part of a land vehicle, a water-borne vehicle, an aircraft or a satellite. It is desirable to reduce vibration in systems, sub-systems, modules or elements which have their operation affected by it. This is particularly the case in high vibration environments, for example systems located close to engines, such as engine management systems. It is also desirable to reduce vibration suffered by optical imaging systems or electronic systems containing oscillators and resonators. Optical imaging systems mounted on vehicles, for example helicopters, are particularly prone to vibration. Such vehicles are used in surveillance operations by commercial and other organisations, such as the police, for example in search and rescue operations. Of course, control of vibration may be desirable in other non-vehicle applications, such as land-based systems.

One known method of reducing vibration is to rigidly secure the assembly to the support and to make the assembly and support structure as rigid as possible to prevent resonances developing. To reduce the likelihood of flexural resonances in the assembly, this in practice results in the assembly being massive. Whilst such systems may be practical for static land-based systems, they are unsuited to vehicle based applications and particularly airborne applications where weight is a prime concern.

It is also known to mount the assembly to the support using vibration isolating couplings which are designed to prevent the transmission of vibrations at a selected frequency or range of frequencies, these often being the resonant frequencies of the system. Such systems are termed "passively damped systems" and can be highly effective in many applications. Passive systems however invariably increase the overall size and weight of the assembly and are only effective at damping vibrations with a frequency above a few hundred Hertz.

Active vibration systems have also been proposed in which the assembly is mounted to the support using a vibration isolating coupling which incorporates an actuator to produce a force to oppose the vibration. Typically an active vibration system comprises a sensor, often an accelerometer, mounted on the assembly to detect the vibration to be suppressed and control circuitry which uses the output from the sensor to control the actuator. Since the assembly, which can weigh several tens, hundreds or even thousands of kilograms, is supported by the isolating coupling, the actuator is required to produce large displacements of the order of a few millimetres and large forces. As a result the actuators tend to be electromagnetic or hydraulic in nature. Although such systems tend to be more effective and lighter than passive systems, their weight and size are still unacceptably high for many airborne applications.

In the case of an optical imaging system such as a camera, it is desirable to reduce vibration in all parts of the camera which are associated with the optical path, i.e. between the receiving aperture and detector plane. For example, a camera, elongate in form, having an aperture at one end which is fixed to a support will be equivalent to:
(i) a cantilever beam if fixed at its other end;
(ii) two cantilever beams if fixed rigidly at its mid-point; or
(iii) a pivoted beam if fixed flexibly at its mid-point.

In all cases vibration suffered by the camera will degrade its imaging ability due to movement of the aperture relative to the imaging plane and/or movement of the camera relative to an object on which it is focussed. In high resolution optical systems movements of a few tens of microns will significantly degrade the performance of the system.

The present invention has arisen in an endeavour to provide a vibration control system which at least in part overcomes the limitations of the known systems.

According to the present invention an apparatus for actively damping vibrations in an element which is secured to a support comprises: an actuator locatable at a point adjacent to the point of attachment of the element to the support and operable to apply force between the element and the support; a sensor associated with the element for producing a signal in response to vibration of the element and control means for operating the actuator in response to said signal to apply a force to the element to damp vibrations therein. Typically the control means will comprise a feedback circuit between the sensor and the actuator configured such that the actuator produces a vibration-controlling force which has an anti-phase relationship to the vibration.

Preferably the actuator comprises a piezoelectric actuator. It can be in the form of a bulk piezoelectric material or a multi-layer piezoelectric device having alternate piezoelectric material and electrode layers. Alternatively the actuator can comprise an electrostrictive or magnetostrictive actuator. All of these types of actuators provide the benefit of being extremely compact and lightweight making them ideally suited to applications where weight and size are of prime concern. Although only capable of producing relatively small displacements, typically of the order of a few microns, such actuators are ideally suited to the apparatus of the invention since they are operable to apply force to the element at a point which is adjacent to the attachment point of the element to the support member. With such an arrangement the element itself thus provides a mechanical advantage and amplifies this displacement such that damping of vibration of much larger amplitudes is possible. This, it will be appreciated, is reliant on the element being substantially rigid.

Advantageously the sensor comprises an accelerometer which is preferably mounted on the element at a point where maximum amplitude of vibration occurs. Typically this will be at the point which is distal from the element's point of attachment to the support. Alternatively the sensor can comprise a strain sensor which is secured to the element at a point where maximum strain is expected to develop. Typically this is likely to be close to the attachment point of the element to the support member.

The invention finds particular application when the element comprises a cantilever beam or in which the element is attached to the support such that it comprises two cantilever beams. In the case of the latter the apparatus preferably further comprises respective actuators mounted adjacent to the point of attachment of each cantilever beam and a respective sensor associated with each beam and the control means is operable to control each actuator in response to the signal from its respective sensor to damp vibration in each beam.

Alternatively the element is secured to the support flexibly about a mid-point.

Preferably the support comprises a vehicle such as aircraft or helicopter and the element comprises an optical imaging system.

According to a further aspect of the invention a method of actively damping vibrations in an element which is secured to a support comprises: locating an actuator at a point adjacent to the point of attachment of the element to the support, the actuator being operable to apply force between the element and the support; measuring vibration of the element and controlling the actuator in response to said measured vibration to apply a force to the element to damp vibrations therein.

Embodiments of the invention will now be described by way of example only with reference to the accompanying drawings in which:
Figure 1 is a schematic representation of an actuator for use in an active vibration control apparatus of the invention;
Figure 2 is a schematic representation of an active vibration control apparatus in accordance with a first embodiment of the invention which incorporates the actuator of Figure 1;
Figure 3 is an active vibration control apparatus in accordance with a second embodiment of the invention; and
   Figures 4 to 7 are schematic representations of active vibration control apparatus in accordance with further embodiments of the invention.

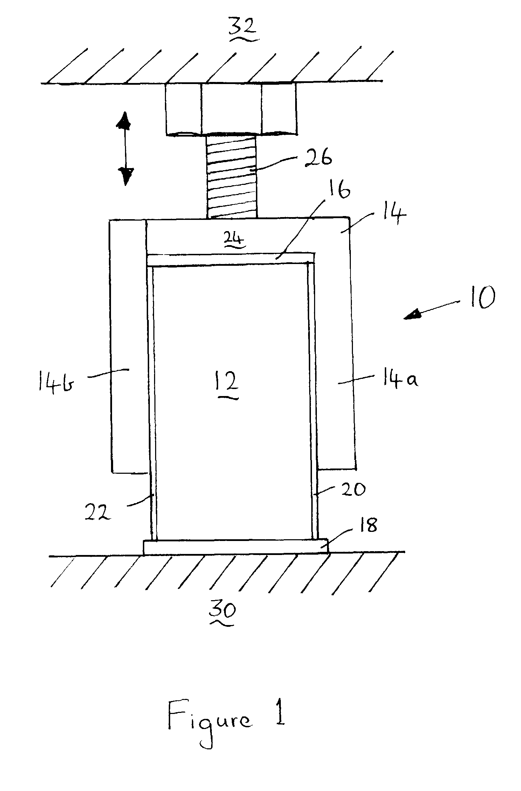

Referring to Figure 1 there is shown a piezoelectric actuator 10 which comprises a multi-layer piezoelectric material body 12 which is housed in a metal frame 14. The body 12, which typically has dimensions of 20x10x10mm, comprises a stack of two hundred layers of lead zirconate titanate (PZT) of 100µm thickness having electrode layers disposed between. The layers run in a plane which is vertical as illustrated in Figure 1. Alternate electrode layers are electrically connected together, by for example a respective common electrode layer on the remaining face of the body 12. Application of an electrical potential difference across the common electrodes causes each of the piezoelectric layers to expand or contract in the same direction as indicated by the double headed arrow in Figure 1 (ie in a substantially vertical direction). Thus varying the applied electrical potential causes the length of the body 12 to expand or contract by typically ±0.5µm with a force of 325 Newtons (3.2 MPascals).

To prevent electrical shorting of the various electrode layers by the metal frame 14 electrical insulation is provided on the outer faces of the body 12. A suitable material for the electrical insulation layers is a fibre/epoxy composite. In Figure 1 a combination of such measures are shown with the body 12 having insulating layers on its upper 16 and lower 18 faces and the two faces 20, 22 which are in contact with the frame 14.

The frame 14 is dimensioned such that the body 12 is able to freely expand and/or contract without hindrance. The frame 14 comprises two parts 14a and 14b which are secured together, using a screw fixture or alike, such that they form a housing for the body 12. The part 14a is L-shaped in cross-section and comprises a first plate 24 which is parallel to the upper face 16 of the body 12 and a second plate which is perpendicular to the first plate 24 and parallel with the face 20 of the body 12. The part 14b which is planar in form provides a plate onto which the part 14a can be secured so as to house the body 12. Secured to the plate 24 is a fixture 26, in the example shown a jack assembly, for attaching the actuator 10 to another structure 32 as will be described below.

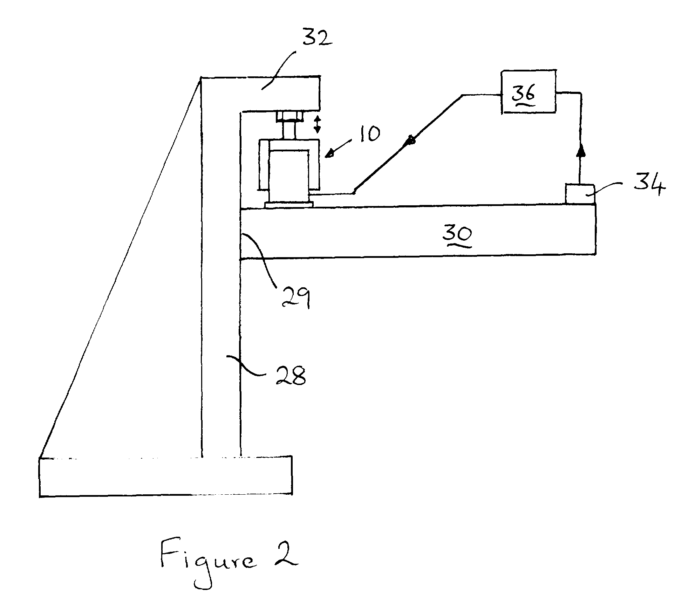

Referring to Figure 2 there is shown an active vibration control apparatus incorporating the actuator 10 of Figure 1 for actively damping vibration in an element 30 which is subject to vibration. The element 30 can for example comprise an optical imaging system such as camera or other system which is to be restrained from vibrating. The element 30, which can be considered as being substantially rigid, is secured at one end to a rigid support member 28. In practice the support 28 comprises a structure to which it is desired to mount the element 30 such as for example a part of an aircraft, other forms of vehicle or any structure which is itself subject to vibration. Since the support 28 is subject to vibration in a plane perpendicular to the plane of the element 30, for example in a vertical direction in Figure 2, the element 30 will vibrate with respect to the support 28 due to movement about the attachment point 29 (junction) of the element 30 with the support 28. The point of attachment 29 can then be considered to be, in effect, a pivot point.

The actuator 10 is located between the element 30 and a part 32 of the support 28 with the insulating layer or lower face 18 of the actuator 10 in contact with an upper surface of the element 30 and an upper surface of the fixture 26 in contact with the part 32. It is to be noted that the actuator 10 is located in close proximity to the attachment point 29 of the element 30 with the support 28.

In operation the actuator 10 is positioned as described and the jack assembly 26 adjusted so that it upper end bears against the surface 32 such that the body 12 of the actuator is in a state of compressive load. The degree of compressive loading is selected to correspond with at least the maximum amount of contraction the actuator 10 is capable of producing, this being typically 0.5µm, thereby ensuring the actuator 10 operates under a compressive load for as much of its counter-vibration cycle as is reasonably possible. To maximise the mechanical coupling of the actuator 10 to the element 30, the lower surface 18 of the actuator 10 is preferably secured to the element using an adhesive joint or other mechanical fastening.

An accelerometer 34 is provided on the element 30 to detect its vibration. Typically the accelerometer 34 is a ceramic device having dimensions 8 x 4 x 2 mm. To ensure maximum sensitivity the accelerometer is located at the point where maximum vibration is likely to occur which for the embodiment of Figure 2 is at the end of the element 30 which is distal from the attachment point 29. It will be appreciated that other forms of sensors can be used depending on the geometry of the element 30 such as, for example, a strain sensor. Again to ensure maximum sensitivity the strain sensor should be optimally positioned at the point of maximum strain, which in the embodiment shown will be the attachment point 29 or a point in close proximity thereto.

Irrespective of the type of sensor 34 used each will produce a signal which is related to the amount of vibration of the element 30. This signal is passed to a feedback control circuit 36 to produce an electrical signal for operating the actuator 10 such that it produces a counter-vibration to damp the vibration of the element 30. Positioning the actuator 10 in close proximity to the attachment point 29 is an important feature of the invention since in this arrangement the element 30 itself provides a mechanical advantage and amplifies the displacement produced by the actuator 10 enabling damping of vibration of much larger amplitudes than would otherwise be possible. As described the actuator 10 can produce displacements of the order of one micron; however, when translated to the end of the element 30 which is distal from the attachment point 29, this corresponds to a displacement of many tens or even hundreds of microns depending on the relative length of the element 30 to the distance the actuator is mounted from the attachment point 29. Effective damping of vibration of an element weighing several tens of kilograms can be achieved with the actuator described which only weighs a few tens of grams. It will be further appreciated that in addition to providing active damping the actuator also provides a degree of passive damping in that it constitutes a strut between the element 30 and support 28.

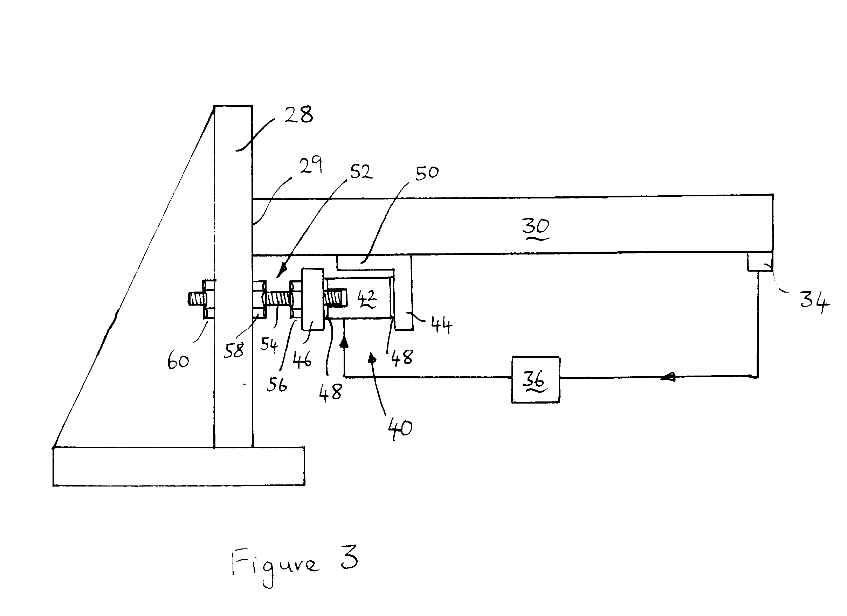

Referring to Figure 3 there is shown an alternative apparatus for actively damping vibration of the element 30. The actuator 40 comprises a multi-layer piezoelectric material body 42 which is located within a frame which comprises parts 44, 46. The body 42 is provided with electrodes through which it is controlled. Insulating layers 48 are also provided to prevent conductive contact with the frame parts 44, 46.

The first part 44 of the frame which bears against the body 42 through the insulating layer 48 comprises an L-shaped bracket having a portion 50 which runs parallel to the element 30. The portion 50 is secured to the element 30 by bolts or some other suitable means. The second part of the frame 46 bears against an opposite end of the body 42 via its respective insulating layer 48. The part 44 which is plate-like in geometry is mounted on a combined jack assembly and fixture 52 which comprises a stud 54 and nuts 56, 58 and 60. The jack assembly 52 serves both to fix the actuator 40 to the support 28 by means of nuts 58 and 60 and also to apply compressive loading to the body 42 by means of nuts 56 and 58. As nut 56 is rotated on the stud 54 such that it moves towards the plate 46 it causes relative movement between the body 42 and the stud 54 which serves to compress the body 42 between the frame parts 44 and 46. Although the body 42 may be held in place purely by this compressive force, it is preferred that it is fixed at one or both ends to one or both of the frame parts 44, 46. As with the embodiment of Figure 2, the body 42 is held in a constant state of compressive force over the full range of vibration of the element 30.

In operation, as the support 28 moves up and down thus causing the element 30 to vibrate with respect to it, this vibration is detected by the accelerometer 34 and its signal is fed back to the actuator 40 via the control circuit 36 causing it to expand and contract in a manner so as to reduce the vibration.

In the case of the apparatus of Figure 3, the actuator 40 expands and contracts in a direction parallel to the plane of the element 30. This expansion and contraction applies force to a portion 50 of the frame part 44 which thus applies a turning moment to the part 44. This provides a restraining anti-vibration force in directions parallel to the vibration, that is perpendicular to the plane of the element 30. It will be appreciated that, in common with the embodiment of the apparatus of Figure 2, the actuator 40 is located in close proximity to the attachment point 29 of the element 30 such that the element 30 provides a mechanical advantage of amplifying the displacement produced by the actuator 40. As well as providing active vibration control the actuator 40 provides passive damping, acting as a passive reinforcement strut on the element 30 which comprises a cantilever.

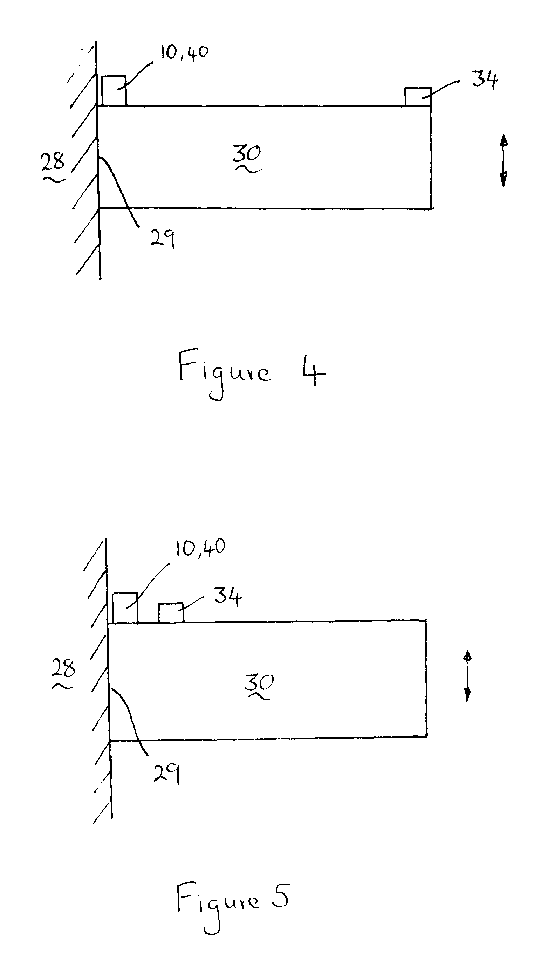

Referring now to Figures 4 to 8 these show schematic arrangements for reducing vibrations in an element 30 which is secured to a support 28 and which is subject to vibration. Positioning of the actuator 10 or 40 and their associated sensor 34 relative to the element 30 and the support 28 is important in achieving high levels of vibration control. The actuator 10 is particularly suited for elements which are mounted either at one end or at their mid-points so that mechanical advantage can best be used.

An element mounted at one end is like a cantilever beam. At low frequencies of vibration, typically 100-200 Hz, the beam will remain substantially rigid with its unsupported end moving up and down. To ensure maximum sensitivity of the vibration control system, the accelerometer 34 is placed at the point of maximum displacement and acceleration, i.e. at the unsupported end of the element, and the actuator is placed adjacent to the junction 29 of the support 28 and the element 30. This is shown in Figure 4. As the frequency of vibration increases, it is possible that the element 30 can oscillate in its fundamental flexural mode. However, in this flexural mode the unsupported end will still correspond to the point of maximum displacement and acceleration and the system will still function correctly. In contrast, if a strain sensor were to be used, it would be located at a place of low displacement and high strain to provide a large signal to be fed back to the actuator. A combination of a high signal level from the sensor and the mechanical advantage of the cantilever system means a high level of control can be achieved.

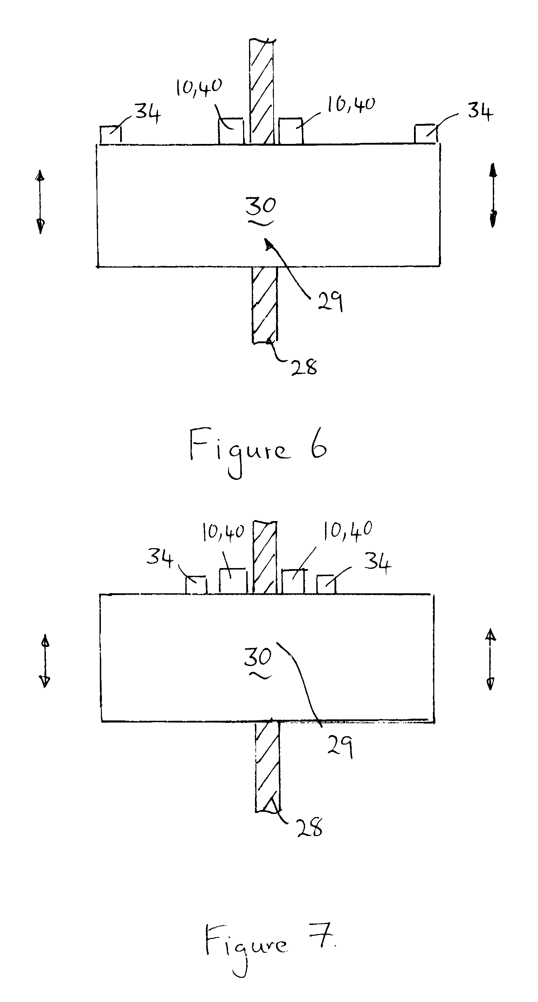

At higher frequencies of vibration, typically 800-1400 Hz, it is possible that the element will exhibit higher flexural modes such that the unsupported end of the element may no longer correspond to the maximum point of displacement and/or acceleration. For control of higher frequency vibrations, in which the element exhibits flexural behaviour such that a number of nodes and antinodes of vibration occur along its length, it is preferable to co-locate the actuator and sensor to ensure that the sensor measures the flexural mode of vibration that the system is intended to damp. Such an arrangement is shown in Figure 5 in which the actuator and sensor are co-located at a position which is close to the junction 29 to employ mechanical advantage to best effect. As the displacement for a given acceleration is less at higher frequencies, the actuator is required to produce less displacement in order to achieve the required level of vibration control.

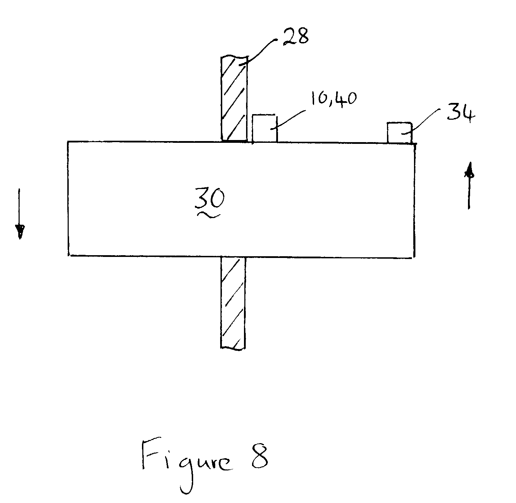

If the element 30 is supported about its centre then there are two available options. If the element 30 is securely fastened to the support 28 then it behaves as two cantilever beams. Depending on the frequency of the vibration to be damped, the arrangement either of Figure 6 or Figure 7 would be suitable respectively for high and low frequencies. It would be preferred to control each of the elements, although if one side is more important than another, only one actuator may be required.

If the element 30 is less rigidly mounted it will tend to pivot about its mounting point. In this case only one actuator is required to control both ends of the element. Again, the chosen configuration of the actuator and sensor will depend on the frequency of the vibration which is to be controlled, more precisely the flexural mode of vibration. Figure 8 shows an arrangement for controlling a low frequency vibration in which the element remains substantially rigid.

The feedback control circuit 36 can use either analogue or digital electronics. It needs to respond quickly to achieve effective control over random vibration and shock. It could be miniaturised and incorporated into the actuator assembly.

Due to the extremely compact nature of the actuator and accelerometer, the invention is particularly suited to being retro-fitted to an existing combination of element and support.

It will be appreciated that the particular embodiments of the invention shown in the drawings have only been described by way of example only and that the invention is not limited to the particular features of these examples. In contrast to the known active vibration control apparatus which seek to prevent vibration being coupled into the element by suitable vibration isolating coupling, the present invention allows coupling of such vibration by securing the element to the support and then damping such vibration using the actuator which is positioned in proximity to the attachment point. A particular advantage of the invention is that vibration control is possible using very compact, lightweight actuators which are capable of only producing relatively small amounts of displacement. It will be appreciated that other forms of miniature actuator could be used such as those incorporating electrostrictive or magnetostrictive materials which again are capable of producing small displacements. In the case of the latter, one such actuator that is envisaged comprises a rod made of Terfenol (Dy_{0.7}Tb_{0.3}Fe_{2.0}) with a coil of conducting wire wound around it.

## Claims

1. An apparatus for actively damping vibrations in an element which is secured to a support, said apparatus comprising: an actuator (10, 40) locatable at a point adjacent to the point of attachment (29) of the element (30) to the support (28) and operable to apply force between the element and the support; a sensor (34) associated with the element for producing a signal in response to vibration of the element and control means (36) for operating the actuator in response to said signal to apply a force to the element to damp vibrations therein.

2. An apparatus according to Claim 1 in which the actuator comprises a piezoelectric, electrostrictive or magnetostrictive actuator.

3. An apparatus according to Claim 1 or Claim 2 in which the sensor comprises an accelerometer or a strain sensor.

4. An apparatus according to any preceding claim in which the element comprises a cantilever beam.

5. An apparatus according to any one of Claims 1 to 3 in which the element is attached to the support such that it comprises two cantilever beams.

6. An apparatus according to Claim 5 and further comprising respective actuators mounted adjacent to the point of attachment of each cantilever beam and respective sensors for each beam and wherein the control means is operable to control each actuator in response to the signal from its respective sensor to damp vibration in each beam.

7. An apparatus according to any one of Claims 1 to 3 in which the element is secured to the support flexibly about a mid point.

8. An apparatus according to any preceding claim in which the support member comprises a vehicle.

9. An apparatus according to any preceding claim in which the element comprises an optical system.

10. A method for actively damping vibrations in an element which is secured to a support, said method comprising: locating an actuator at a point adjacent to the point of attachment of the element to the support, the actuator being operable to apply force between the element and the support; measuring vibration of the element and controlling the actuator in response to said measured vibration to apply a force to the element to damp vibrations therein.
